# EUROPEAN PATENT APPLICATION

(11) **EP 1 038 975 A1**
(43) Date of publication of application: **27.09.2000**
(21) Application number: 99830178.2
(22) Date of filing: 26.03.1999
(51) Int. Cl.: C13D 1/00, A23L 2/04, A23L 1/09, C13K 1/00, C13K 11/00

(54) **Method for the production of glucose and fructose juice from dates**

(71) Applicant: Gimar S.r.l., 12074 Cortemilia (Cuneo) (IT)
(72) Inventor: Bocchi, Roberto, 43100 Parma (IT)
(74) Representative: Gotra, Stefano

(57) **Abstract**

The invention falls within the sector relating to the production of sugary juices.

A method for the production of juice from dates comprises a step in which the dried and broken-up dates are dispersed in hot water at a controlled temperature of 45°C-55°C for a duration of about 60 minutes.

Prior to the dispersion step, it is possible to perform a step involving correction of the acidity of the dates until a pH value of 4-5 is reached.

The step involving dispersion of the dates in water is performed using a quantity of water such that the concentration of the solution is 14°-16° Brix.

At the same time as dispersion of the dates in hot water, it is envisaged adding a mixture of pectolytic enzymes, while keeping the temperature constant at 45°C-55°C.

## Description

The present invention relates to a method for the production of glucose and fructose juice from dates. The method proposes obtaining from dates a sugary juice which can be used, as such, as a component in food products.

The known technique envisages subjecting the dates to an initial sorting operation and to a washing and consequent drying step, followed by a step involving pressing into blocks.

The blocks are then crushed and dispersed in hot water at a temperature of 80-90° C and then the dispersed mass undergoes decanting in order to separate the sugary juice from the suspended substances, such as fibre, stones, etc.

The main drawback of this method lies in the fact that it produces a dark-coloured juice in a condition such that decolorization of said juice would be too costly to allow an industrial use thereof.

In particular it would be necessary to use an enormous quantity of ion-exchange resins, the cost of which would make the cost of the juice thus obtained too high to allow an industrial use thereof.

Moreover, if the dark-coloured juice is not decolorized, it is unsuitable for use in the food industry.

The object of the present invention is that of providing a method for obtaining sugary juice from dates, which is particularly simple and low-cost and is able to obtain a decolorized glucose and fructose juice.

Said objects are fully achieved by the method according to the present invention, which is characterized by the contents of the claims below and in particular by the fact that it envisages a step in which the dried dates are dispersed in hot water at a controlled temperature of 45°C-55°C, after correcting the acidity of the dates until it reaches 4-5 pH.

Dispersion in hot water preferably lasts about 60 minutes and is performed using a quantity of water such that the concentration of the solution is equal to 14°-16° Brix. During dispersion of the dates in hot water it is envisaged adding a mixture of pectolytic enzymes, keeping the temperature constant at 45°C-55°C.

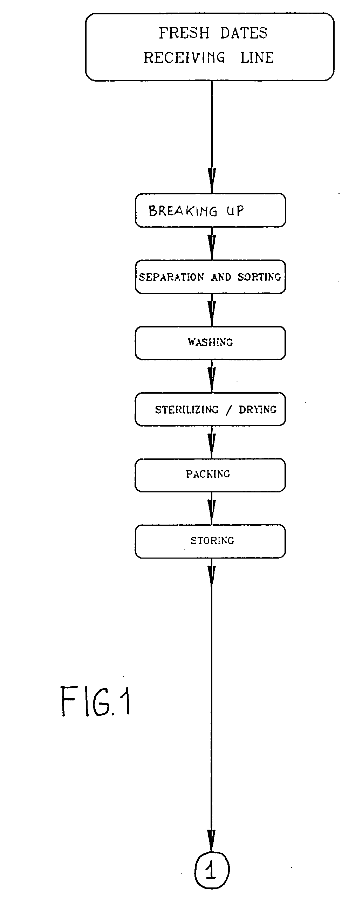

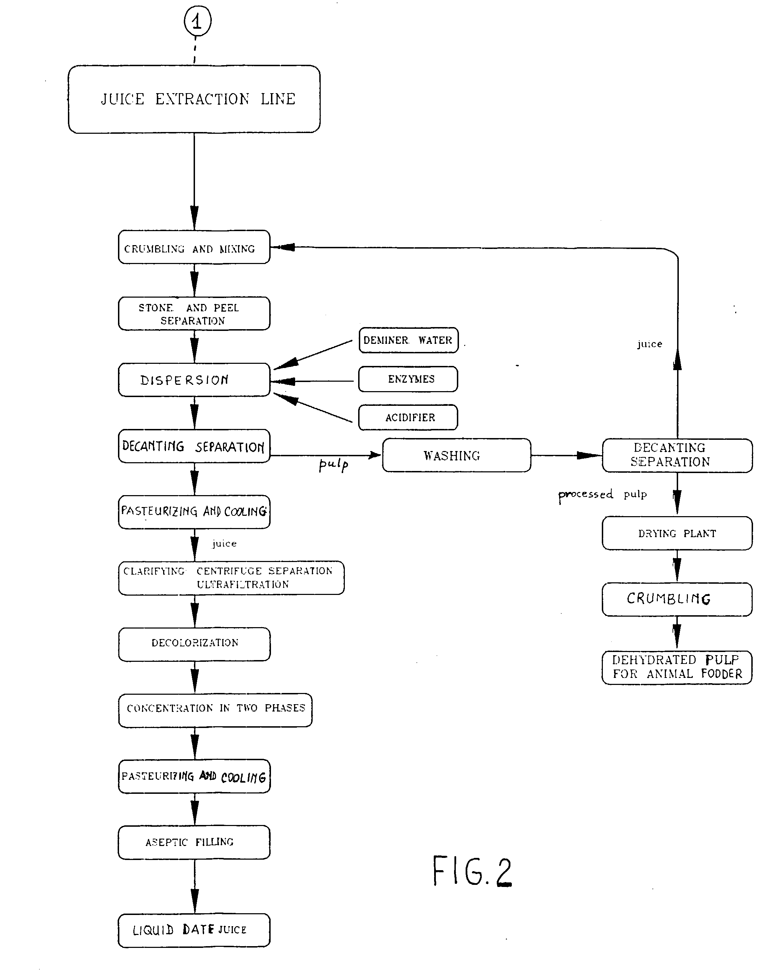

These and other characteristic features will emerge more clearly from the following description of a preferred mode of execution of the method, illustrated in the accompanying flow diagram (figures 1 and 2).

The method envisages a first step involving breaking-up/sorting of the fresh dates followed by washing, sterilization/drying and temporary storage pending further processing.

The product to be processed reaches the plant in baskets, crates or bags which are emptied into a hopper with a following crusher which separates the individual fruit which, on account of the heat and seepage of the sugar, adhere to one another sometimes forming compact blocks.

The dates thus separated are then fed onto a vibrating surface followed by a sorting conveyor, the function of which is to remove the foreign matter (pieces of wood, grit, etc.) and allow subsequent cleaning of the product, which is performed in a washing tunnel by means of jets of pressurised water which remove the inert material such as sand and wash off any harmful residue present.

Then the dates enter a sterilizing/drying tunnel where they undergo drying and desiccation until they have a moisture content of about 18%, a value which is necessary for ensuring conservation of the dates.

The dates, upon leaving the drying tunnel, are weighed and automatically packaged in thermoplastic bags weighing about 20-25 kg each which are then placed on pallets and and stored, pending further processing, in clean, dry and well-ventilated locations.

At the time of their conversion for extraction of the juice, the dates are removed from the store and placed on a working table where the external wrapping is removed and the dates are separated into portions so as to allow entry into a crumbler to which date juice, at a temperature of about 45-55°C, is also supplied from a second decanter for washing the pulp as will be described below. After leaving the crumbler, the dates reach a stone separator which separates the stones and the coarser cellulose of the pulp.

The stones and the waste material, after grinding, are conveyed to a storage zone and are used for making animal fodder.

The pulp leaving the stone separator is conveyed to a dispersion tank where demineralized water is added, until a value of 14-16° Brix and preferably about 15° Brix is reached.

During this step, the juice is extracted and the substances contained inside the cells may be dispersed in the aqueous system.

In an original manner the dispersion tank has added to it, after correction of the pH value, an enzymatic preparation based on pectolytic enzymes which are obtained preferably from strains of Aspergillus Niger, the function of which is to break down the substances with a high molecular weight present in the fruit, which hinder clarification and filtration of the juice.

The enzymatic activity depends very much on the pH and the temperature of the substrate. In the case in question it has been found that the optimum activity range is a temperature of 50°C ±2°C and a pH of 4.0 ±0.2 (but a pH of 4-5 is acceptable) and therefore the correction of the pH value normally occurs by means of the addition of citric acid until the abovementioned pH value is obtained and the dispersion tank, made of stainless steel, is kept regulated at the optimum working temperature of the enzyme indicated above, while stirring the entire mass, for a dispersion time of about 60 minutes.

After dispersion with enzymatic activity, the product (juice+pulp) leaving the dispersion tank undergoes separation of the pulp using machines suitable for separation of suspended solids, called decanters.

The juice which is thus obtained undergoes a pasteurizing heat treatment in tube-bundle heat exchangers, where it is rapidly heated to a temperature of about 100°C ±5°C so as to interrupt the enzymatic activity.

The juice which is obtained therefrom is conveyed, after cooling, directly to the following clarification stage, while the pulp which emerges from the decanter undergoes a first washing operation with water and further processing in a second decanter (helical separator).

The juice obtained from washing of the pulp and from the second decanter is reintroduced into the production process, as already mentioned, via the crumbler which is situated upstream of the stone separator.

The processed pulp is conveyed to a drying oven and, after grinding, is transported to a fodder preparation plant.

Clarification of the juice is performed by means of a first centrifuging step, in which the solid particles still present (with a size bigger than or equal to 10 µm) are removed from the liquid phase by means of a centrifuging effect, and a second ultrafiltration or intensive filtration step (for particles smaller than 10 µm) in which the juice of the dates to be processed comes into contact tangentially with the filtering membranes which prevent the passage of all the particles (both inert and reactive) which have a molecular weight greater than 10,000. These membranes have a cylindrical shape and are arranged in sets inside stainless steel casings.

After dispersion, it is envisaged that complete separation is performed in two successive stages so as to achieve a better yield of extracted sugars, namely a sugar extraction of about 90% with respect to the sugar content of dates.

In this case, after the first separation performed by a horizontal decanter, which produces pulp still containing a high sugar concentration, a step involving dilution (washing) of the pulp with the addition of water (preferably demineralized) is envisaged: the juice obtained reaches a sugar concentration of at least 2° Brix.

The juice undergoes a separation step performed in a second decanter or helical separator, from which the following are obtained, as already described above:
- processed pulp and solid waste which are conveyed to a storage zone and to a drying stage in order to obtain dried pulp for use as animal fodder, preferably packaged in 50 kg bags;
- recycled juice which is used instead of the water during crumbling/stone-separation. The juice obtained after dispersion and separation is subjected to a pasteurization step (for neutralization of the enzymes) at a temperature of about 90°-105°C and preferably about 92°C, followed by centrifugal clarification by means of a vertical clarification centrifuge.

This produces a clear juice which, after cooling to a temperature of about 45°C, is subjected to ultrafiltration and decolorized by means of mixing with one or more decolorizing resins (two in the present case, but their number may vary depending on the type of resins used), with which corresponding regenerating agents are associated.

In the specific case, these consist of adsorbent decolorizing resins of the "macroporous copolymer" type (matrix: styrene divinylbenzene).

The throughput of juice to be decolorized is equal to about 0.8 m³/m³/resin per hour. The resins are subjected to periodic regeneration using NaOH and acid.

After decolorization, the juice is subjected to a concentration stage consisting of two steps: a first step involving pre-concentration by means of reverse osmosis until the concentration of 21°-22° Brix is reached and a second step in a continuous multiple-stage, falling film, vacuum evaporator/concentrator.

This produces as a final product a corrected date juice with a concentration of about 70°-75° Brix, which satisfies the market requirements, with a coloration of no more than 250 ICUMSA, and which is preferably packaged in aseptic containers, after undergoing a further pasteurizing and cooling step, where necessary.

According to an alternative mode of execution of the method, which nevertheless results in a lower yield than the method described above, it is envisaged that, after dispersion, a single step involving separation of the dispersed mass is performed by means of a horizontal decanter which allows a sugary juice to be separated from the suspended substances (fibre, stone, etc.) prior to the pasteurization step.

In the method according to the present invention, the original step of dispersion in water at 45°C-55°C (and preferably 48°C-52°C) and the addition of pectolytic enzymes result in an improved performance of the resins since they facilitate the separation of the sugary glucose and fructose juice from the fibre and decolorization of the juice.

The temperature range between 45°C and 55°C is particularly effective since, at temperatures lower than 45°C, a much greater quantity of enzymes would be required since the enzymes have very slow reactions at temperatures lower than 45°C.

If the temperature exceeds 55°C there is the problem, instead, that the enzymes have difficulty surviving high temperatures.

The pH correction step is also important because it creates an environment which is particularly suitable for the enzymes.

The best results have been obtained by using enzymes produced from a strain of Aspergillus Niger having mainly a pectolytic action.

The dates have a variable composition depending on the type, state of maturation and conservation and other parameters, so that the yield of the method, namely the quantity (kg) of juice produced per kilogram of dates, cannot be defined within precise limits, although it may be stated that it is about 90% in the case of the two-step separation process which uses the juice recycled or recirculated in the "second" dispersion stage.

The production of sugary juice from dates which can be used industrially is particularly advantageous since said juice contains about 50% glucose and 50% fructose (preferably glucose-containing), while for example the juice which is obtained from maize contains only glucose.

## Claims

1. Method for the production of juice from dates, comprising the steps of:
- sorting the dates;
- washing the dates;
- pressing the dates into blocks and drying them;
- breaking-up the dates received;
- dispersion thereof in hot water;
- separating the sugary juice;
- decolorizing the sugary juice so as to obtain the final date juice, characterized in that the step involving dispersion of the dates is performed in hot water at a controlled temeprature of 45°C-55°C.

2. Method according to Claim 1, which comprises, prior to the dispersion step, a step involving correction of the acidity of the dried and broken-up dates until a pH value of 4-5 is reached.

3. Method according to Claim 1, in which the acidity correction step is performed by means of the addition of citric acid.

4. Method according to Claim 1, in which the dispersion step is performed at a temperature of about 50°C.

5. Method according to Claim 1, in which the dispersion of dates in hot water has a duration of about 60 minutes.

6. Method according to Claim 1, in which the dispersion of the dates in water is performed using a quantity of water such that the concentration of the solution is 14°-16° Brix.

7. Method according to Claim 1, which comprises, at the same time as dispersion of the dates in hot water, the addition of a mixture of pectolytic enzymes, while keeping the temperature constant at 45°C-55°C.

8. Method according to Claim 1, which involves, after dispersion in hot water, separation in two succesive stages comprising:
- a first stage performed with a horizontal decanter;
- dilution of the separated pulp and centrifugal separation of the processed pulp from a recycled juice;
- a second diffusion stage using the recycled juice;
- a second stage involving separation of the sugary juice in the horizontal decanter.

9. Method according to Claim 1 or Claim 8, which comprises, after separation of the sugary juice and prior to decolorization, a step involving pasteurization of the sugary juice followed by centrifugal clarification.

10. Method according to Claim 1, in which separation of sugary juice is performed by means of a first centrifuging step (for particles with a size equal to or greater than 10 µm) and a second step involving ultrafiltration (for particles with a size smaller than 10 µm).

11. Sugary date juice obtained with the method according to any one of Claims 1 to 10.
